# FASCICULE DE BREVET EUROPEEN

(11) **EP 0 874 383 B1**
(45) Date de publication et mention de la délivrance du brevet: **31.05.2006**
(21) Numéro de dépôt: 98400885.4
(22) Date de dépôt: 09.04.1998
(51) Int. Cl.: H01H 47/00, F16P 3/14

(54) **Circuit de surveillance**
Überwachungsschaltung
Monitoring circuit

(30) Priorité: 11.04.1997 DE 19715098
(43) Date de publication de la demande: 28.10.1998
(73) Titulaire: SCHNEIDER ELECTRIC INDUSTRIES SAS, 92500 Rueil-Malmaison (FR)
(72) Inventeur: Klees, Christoph, 51674 Wiehl (DE)

(56) Documents cités:
- DE-A- 4 134 396
- US-A- 3 875 403
- US-A- 4 157 580
- US-A- 5 543 997

## Description

La présente invention concerne un circuit de surveillance destiné à contrôler en permanence plusieurs, au moins deux, en particulier quatre, entrées de signaux.

Un tel circuit est décrit dans le document DE 4134 34396 A.

Des circuits de surveillance de ce type sont connus à partir de l'état de la technique. Ils sont utilisés par exemple pour la surveillance des barrages photoélectriques par réflexion comprenant des filtres de polarisation. Pour ce faire, au moins deux capteurs sont testés cycliquement avec une fréquence de 300 Hz par exemple. Si au cours de ce test, le système détecte un obstacle dans l'un des deux trajets du faisceau ou un incident sur l'une des deux chaînes redondantes dans le dispositif électronique ou sur l'un des deux capteurs, dans ce cas deux relais de sécurité sont mis au repos et déconnectent une machine devenue une source de danger, à laquelle ils sont connectés. La surveillance de la totalité du système est assurée par une entrée de test externe, les relais étant également mis sous la surveillance du dispositif. Après une rupture du champ de protection, c'est-à-dire après déconnexion de la machine, seule une opération manuelle peut remettre sous tension la machine. L'inconvénient de ce circuit de surveillance, ci-dessus décrit, réside dans le fait que les relais utilisés comportent des composants mécaniques qui permettent un fonctionnement relativement lent, de telle sorte qu'il n'est possible de travailler qu'avec des fréquences de surveillance déterminées. Par ailleurs, les relais sont soumis en principe à l'usure, ce qui signifie que l'usure d'un relais par fusion ou autre raison peut entraîner des modifications dans le circuit.

À partir de cet état de la technique, l'objet de la présente invention est de concevoir un circuit de surveillance selon le générique de la présente invention, par lequel il est possible d'assurer pendant de courts intervalles de temps la surveillance intégrale de plusieurs entrées de signaux et, de ce fait, du transmetteur de signaux, sans qu'il soit nécessaire de tenir compte des influences externes telles que la durée de vie des barrages photoélectriques.

Cet objet est résolu par un circuit selon la revendication 1.

À cet effet, il est proposé que l'un des deux condensateurs sollicite de manière oscillante les relais par un courant de décharge des relais. Si le courant de décharge n'est pas transmis, le relais est mis au repos, de manière à commander l'arrêt de la machine connectée au circuit de surveillance. Un circuit de surveillance de ce type est appliqué en particulier dans la technique de surveillance, c'est-à-dire pour des machines qui doivent être placées sous contrôle en cours de service pour éviter toute manoeuvre susceptible de mettre en danger l'opérateur. À titre d'exemple, des circuits de surveillance de ce type sont utilisés en liaison avec des barrages photoélectriques dans des dispositifs à surface d'impact, des tours ou autres machines qui en cours de service peuvent devenir une source de danger.

Selon une autre caractéristique de la présente invention, il est proposé que les entrées de signaux sont connectées à des transmetteurs de signaux optoélectriques. Le signal optique émis par un émetteur est transformé en signal électrique dans un récepteur, lequel est raccordé à l'entrée des signaux. Le récepteur peut être conçu à cet effet comme un réflecteur, si l'émetteur du signal optique est en même temps aussi le récepteur. Les signaux captés par les entrées des signaux sont ainsi contrôlés automatiquement. Si des divergences apparaissent au cours de ce contrôle, la machine connectée au circuit est arrêtée. Le circuit de surveillance permet donc une surveillance automatique, pendant laquelle les signaux sont démodulés entre les entrées de signaux et le relais.

Selon une autre caractéristique de la présente invention, il est proposé que les sorties de potentiel des entrées de signaux sont connectées à des transistors directement commandés par les potentiels des entrées de signaux. Ces transistors commandent le chargement des deux condensateurs, qui sont chargés et déchargés de manière oscillante, de telle sorte que les relais captent en permanence une impulsion de courant.

Enfin, selon une autre caractéristique de la présente invention, il est proposé qu'au moins deux entrées de signaux sont montées en parallèle. L'avantage du montage en parallèle des entrées de signaux réside dans le fait que les capteurs peuvent être commandés en parallèle, de telle sorte qu'il n'est pas nécessaire de tenir compte des influences extérieures telles que les durées de vie en fonction des sources lumineuses.

Des barrages photoélectriques à une voie peuvent être combinés avec le circuit de surveillance conforme à l'invention, lesquels barrages photoélectriques peuvent être contrôlés en permanence à l'aide de leur contact de contrôle. De préférence, les barrages photoélectriques sont décalés par rapport à leur émetteur et à leur récepteur, afin d'éviter une influence réciproque. Il est possible de connecter autant de barrages photoélectriques que d'entrées de signaux, les barrages photoélectriques étant configurés par des ponts de câbles externes.

D'autres caractéristiques et avantages de la présente invention se dégagent de la description ci-après du dessin correspondant, lequel montre un mode de réalisation préféré d'un circuit de surveillance.

Le dessin montre :
figure 1 : le schéma d'un circuit de surveillance avec les conductions du courant au cours d'une première phase ;
figure 2 : le circuit de surveillance selon la figure 2 dans une deuxième phase ; et
figure 3 : un circuit formé par deux relais, connecté au circuit de surveillance des figures 1 et 2 et destiné à mettre sous tension une machine externe.

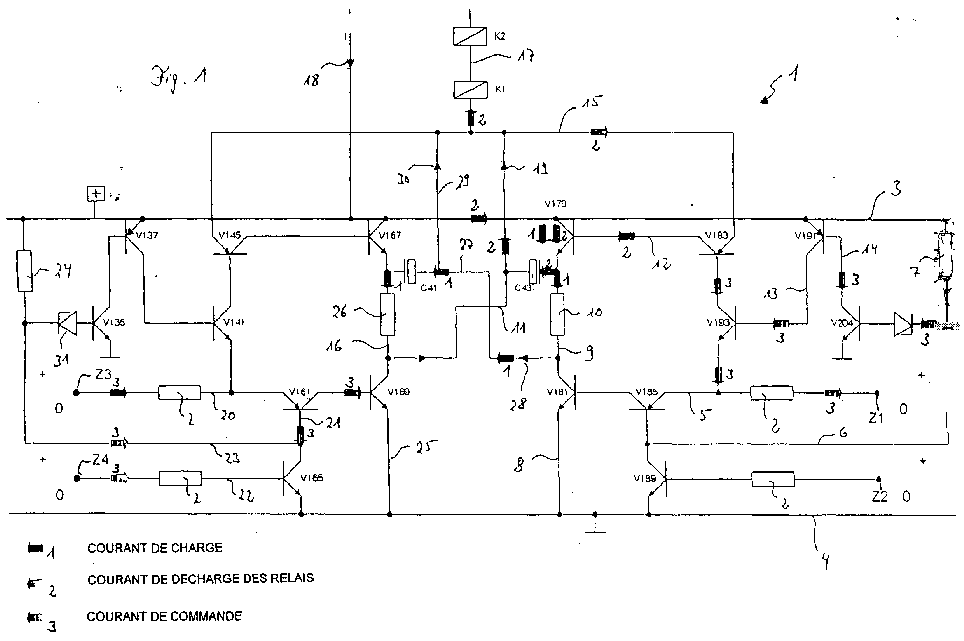

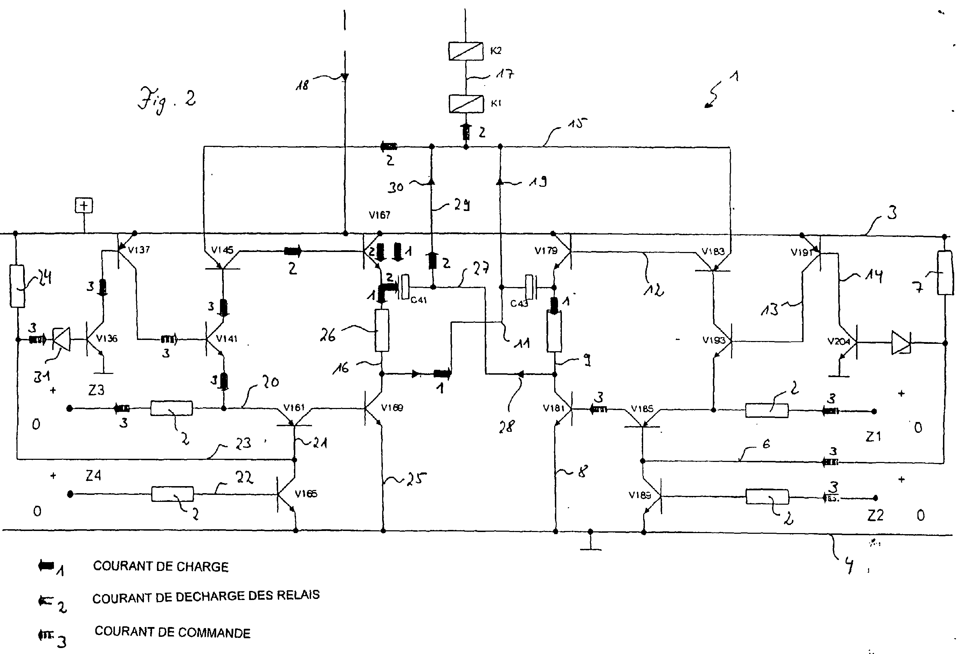

Les figures 1 et 2 montrent un circuit de surveillance 1. Le circuit de surveillance 1 comporte quatre entrées de signaux Z1, Z2, Z3 et Z4. Chaque entrée de signaux Z1, Z2, Z3 et Z4 est connectée à une résistance 2.

Par ailleurs, les figures 1 et 2 montrent une ligne d'énergie positive 3 et une ligne d'énergie négative 4.

L'entrée de signaux Z1 est reliée par l'intermédiaire d'une ligne 5 avec le côté émetteur d'un transistor V185. La base du transistor est reliée, d'une part, par l'intermédiaire d'une ligne 6 à la ligne d'énergie positive en passant par une résistance 7 et, d'autre part, au collecteur d'un transistor V189, lequel transistor V189 est relié par son émetteur à la ligne d'énergie négative 4 et par sa base à l'entrée de signaux Z2 en passant par une résistance 2.

Le transistor V185 communique par son collecteur avec la base d'un transistor V181, qui est relié par son émetteur à la ligne d'énergie négative 4, par l'intermédiaire d'une ligne 8, et est relié par son collecteur à une ligne 9. Une résistance 10 est montée dans la ligne 9, laquelle résistance est montée en parallèle avec un condensateur C43, le condensateur étant conçu comme un condensateur électrolytique polarisé, dont les plaquettes négatives sont reliées à la ligne 9 et les plaquettes positives à une ligne 11. Par ailleurs, un transistor V179 est relié par son émetteur à la ligne 9 et par son collecteur à la ligne d'énergie positive 3.

La base du transistor V179 est reliée au collecteur d'un transistor V183 par l'intermédiaire d'une ligne 12. Le transistor V183 est, pour sa part, relié par sa base avec le collecteur d'un transistor V193, dont l'émetteur est relié à la ligne 5 et dont la base est reliée par l'intermédiaire d'une ligne 13 au collecteur d'un transistor V191. Le transistor V191 est relié par son émetteur avec la ligne d'énergie négative 4 et par sa base avec le collecteur d'un transistor V204, par l'intermédiaire d'une ligne 14. La base du transistor V204 est reliée à la ligne 6 en passant par une diode de Zener.

Les transistors V189, V181, V179, V193 et V204 sont conçus comme des transistors NPN, alors que les transistors V191, V183 et V185 sont conçus comme des transistors PNP.

La ligne 11 fait communiquer une ligne 15 avec une ligne 16, qui sera encore décrite ci-après.

La ligne 15 communique avec l'émetteur du transistor V183 et avec l'émetteur d'un transistor V145. En outre, la ligne 15 est reliée à une ligne 17, dans laquelle sont montés en série deux relais K1 et K2 et qui par ailleurs est reliée à la ligne d'énergie positive 3. Une diode 18 est montée dans la ligne 17. Une autre diode 19 est montée dans la ligne 11.

Le côté droit du circuit de surveillance, ci-dessus décrit, est reproduit de manière analogue dans la partie gauche du circuit de surveillance 1 pour les entrées de signaux Z3 et Z4. L'entrée de signaux Z3 est reliée par l'intermédiaire d'une ligne 20, dans laquelle est montée la résistance 2, avec l'émetteur d'un transistor V161, lequel transistor V161 est relié par l'intermédiaire d'une ligne 21 avec le collecteur d'un transistor V165. À la base du transistor V165 est raccordée une ligne 22, qui relie la base du transistor V165 avec l'entrée de signaux Z4. Le transistor V165 est relié par son émetteur avec la ligne d'énergie négative 4.

Entre la base du transistor V161 et le collecteur du transistor V165, la ligne 21 communique avec une ligne 23, dans laquelle est montée une résistance 24 et qui est reliée à la ligne d'énergie positive 3.

Le collecteur du transistor V161 est relié avec la base d'un collecteur V169, dont l'émetteur est relié par l'intermédiaire d'une ligne 25 avec la ligne d'énergie négative 4 et dont le collecteur est monté en série avec une résistance 26 et un condensateur C41. Le condensateur C41 est, pour sa part, conçu comme un condensateur électrolytique polarisé, dont la plaquette positive est reliée par l'intermédiaire d'une ligne 27 avec la ligne 9, une diode 28 étant montée dans la ligne 27. La ligne 27 est en outre reliée à la ligne 15 par l'intermédiaire d'une ligne 29, dans laquelle est montée une diode 30.

Entre le condensateur C41 et la résistance 26, est monté l'émetteur d'un transistor V167, dont le collecteur est relié à la ligne d'énergie positive 3 et dont la base est reliée à l'émetteur du transistor V145, précédemment mentionné. Le transistor V145 est - comme il a déjà été mentionné - relié par son émetteur avec la ligne 15. La base du transistor V145 communique avec le collecteur d'un transistor V141, dont l'émetteur est relié à la ligne 20. La base du transistor V141 est reliée au collecteur d'un transistor V137 qui, pour sa part, est relié par son émetteur avec la ligne d'énergie positive 3. La base du transistor V137 communique avec le collecteur d'un transistor V136, dont la base est reliée à la ligne 23 en passant par une diode de Zener 31, la résistance 24 étant montée en série avec la diode 31.

La figure 1 montre une première phase du circuit de surveillance avec le courant de charge, le courant de décharge des relais et le courant de commande. Le courant de charge est repéré en outre par une flèche avec le chiffre 1, le courant de décharge des relais par une flèche avec le chiffre 2 et le courant de commande par une flèche avec le chiffre 3. Dans cette première phase, les entrées de signaux Z3 et Z4 captent un potentiel positif et les entrées de signaux Z1 et Z2 captent un potentiel nul. Le condensateur C43 est chargé et le condensateur C41 est déchargé.

Les transistors V161, V165 et V169 sont commandés directement par les potentiels captés aux entrées de signaux Z3 et Z4. Les courants de charge correspondants sont acheminés par les lignes 20, 21 et 22.

Les potentiels nuls des entrées de signaux Z1 et Z2 font en sorte que le transistor V204 soit conducteur. Ce transistor V204 permet d'acheminer le courant à la base du transistor V191, dont le collecteur commande également la base du transistor V193. Le transistor V193 est conducteur à la seule condition que l'entrée de signaux Z1 capte un potentiel nul. Dans ce cas, le courant de base du transistor V183, qui est fourni par le condensateur C43, traverse le transistor V193. Le courant de base du transistor V179 est acheminé par l'intermédiaire du trajet collecteur-émetteur du transistor V183.

Dans cette phase, les transistors V169 et V179 sont utilisés de telle sorte que le condensateur C43 envoie un courant de décharge dans les relais K1 et K2. La décharge est exécutée par l'intermédiaire du transistor V179, la décharge fournissant aussi le courant de base pour les transistors V179 et V183.

Le condensateur C41 est chargé par l'intermédiaire des transistors V179 et V169 en même temps que s'opère la décharge du condensateur C43. Le chargement du condensateur C41 résulte du potentiel capté aux entrées de signaux Z3 et Z4.

Dans la deuxième phase représentée dans la figure 2, qui alterne toutes les 2,3 ms avec la première phase représentée dans la figure 1, les transistors V181, V185 et V189 sont commandés directement, étant donné que dans le cas présent les entrées de signaux Z1 et Z2 présentent un potentiel et les entrées de signaux Z3 et Z4 présentent un potentiel nul. Les potentiels nuls des entrées de signaux Z3 et Z4 font en sorte que le transistor V136 soit conducteur. Ce transistor V136 permet d'acheminer le courant vers la base du transistor V137, dont le collecteur commande également la base du transistor V141. Le transistor V141 est conducteur à la seule condition que l'entrée de signaux Z3 capte un potentiel nul.

Le courant de base du transistor V145, qui est fourni par le condensateur C41, traverse le transistor V141. Le courant de base du transistor V167 est acheminé par l'intermédiaire du trajet collecteur-émetteur du transistor V145.

Dans cette phase, les transistors V167 et V181 sont utilisés. En outre, le condensateur C41 envoie un courant de décharge dans les relais K1 et K2 par l'intermédiaire du transistor V167. Par ailleurs, le condensateur C41 fournit le courant de base pour les transistors V167 et V145. Le condensateur C43 est chargé par l'intermédiaire des transistors V167 et V181 en même temps que s'opère la décharge du condensateur C41.

Les phases ci-dessus décrites se renouvellent toutes les 2,3 ms environ, de telle sorte que le circuit de surveillance exécute une surveillance permanente des entrées de signaux Z1, Z2, Z3 et Z4. Si, au cours de la surveillance, il s'avère qu'un potentiel ne présente ni la valeur adéquate, ni la polarité appropriée, le condensateur ne se déchargera pas, de telle sorte que ce condensateur ne pourra pas envoyer ensuite un courant de décharge dans les relais K1 et K2. Les relais K1 et K2 sont donc mis au repos, de telle sorte que la machine connectée avec lesdits relais constitue une source de danger et elle est immédiatement débranchée. La présence d'un défaut sur l'un des composants entraîne la fusion des transistors V167, V169, V179 et/ou V181, de telle sorte que la totalité de la commande est arrêtée, ce qui empêche également le chargement d'un condensateur ; par conséquent, pendant la phase suivante, ce condensateur ne pourra pas envoyer un courant de décharge dans les relais K1 et K2.

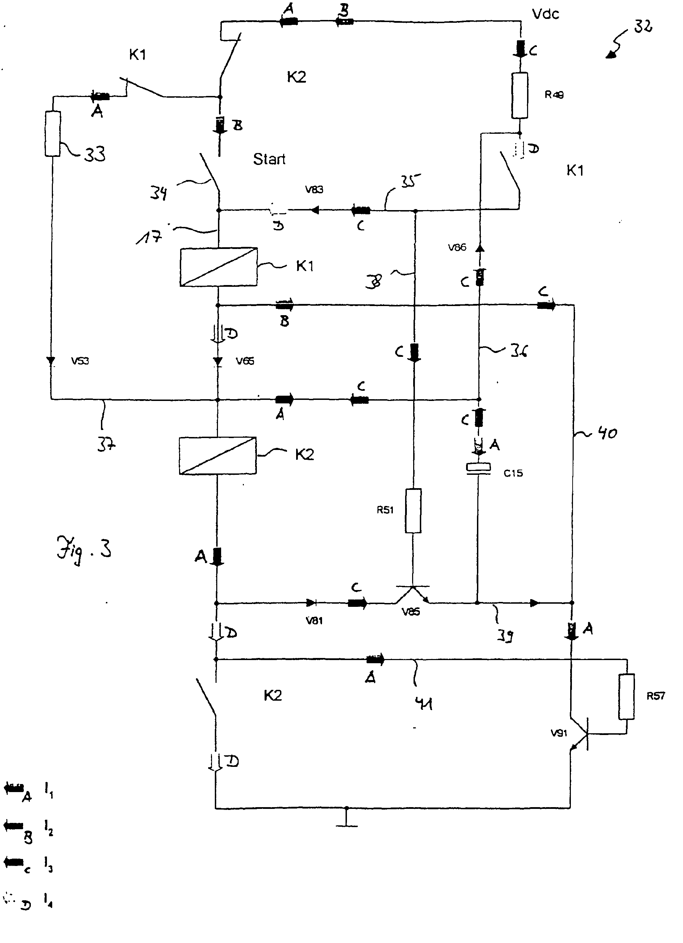

Pour activer initialement le circuit de surveillance 1 ci-dessus expliqué et représenté dans les figures 1 et 2, il est nécessaire d'exécuter un processus de démarrage, qui se déroule par l'intermédiaire d'un circuit 32, représenté dans la figure 3.

La figure 3 montre la ligne 17 dans laquelle sont montés les relais K1 et K2. Une diode V65 est montée en série entre les deux relais K1 et K2. Une résistance 33 et une diode V53 sont montées en parallèle par rapport au relais K1. Un contact de travail du relais K1 est monté en amont de la résistance 33. Par contre, le contact de travail du relais K2 est monté en série avec un commutateur 34 destiné à commander le démarrage externe. Le contact de rupture du relais K2 est monté dans la ligne 17, alors que le contact de rupture du relais K1 est monté dans une ligne 35 reliée à la ligne 17, laquelle ligne 35 est reliée par l'intermédiaire d'une résistance R49 au contact de travail du relais K2. Par ailleurs, une diode V83 est montée dans la ligne 35, le contact de rupture étant disposé entre la résistance R49 et la diode V83. Une diode V86 et un condensateur C15 sont montés dans une ligne 36 connectée entre la résistance R49 et le contact de rupture du relais K1. Entre le condensateur C15 et la diode V86, la ligne 36 est reliée à une ligne 37 qui, d'une part, est reliée à la ligne 17 et, d'autre part, est connectée à la résistance 33.

Parallèlement à la ligne 36 est montée une ligne 38 qui relie la ligne 35 avec un transistor V85, la ligne 38 étant reliée à la base du transistor V85. Par son collecteur, le transistor V85 est relié à la ligne 17 entre le relais K2 et le contact de rupture du relais K2, alors que l'émetteur du transistor V85 communique avec une ligne 39, qui communique elle-même avec la ligne 36, dans laquelle est montée le condensateur C15. La ligne 39 est en outre reliée par l'intermédiaire d'une ligne 40 avec la ligne 17, entre les deux relais K1 et K2.

Une ligne 41, dans laquelle est montée une résistance R57, est disposée parallèlement à la ligne 39. La ligne 41 relie la ligne 17 avec la base d'un transistor V91, dont le collecteur communique avec la ligne 40.

Le processus de démarrage externe se décompose en quatre phases, qui obligatoirement doivent être exécutées l'une après l'autre. Les quatre phases sont représentées dans la figure 3 par les courants i₁, i₂, i₃ et i₄, des flèches repérées par les capitales A à D étant attribuées aux courants iₙ.

Au cours de la première phase, le condensateur C15 est chargé par l'intermédiaire des contacts d'ouverture des deux relais K1 et K2. À cette occasion, le courant de base du transistor V91 traverse le relais K2. Le chargement du condensateur C15 est nécessaire pour pouvoir utiliser le relais K2. Au cours de la deuxième phase, le commutateur 34 est actionné de manière à mettre sous tension le relais K1. Le courant traverse alors le relais K1 et le transistor V91. Cette phase constitue l'instruction de démarrage.

Lorsque, après l'instruction de démarrage, le relais K1 est mis en position d'auto-entretien, le courant traverse la résistance R49, le relais K1 et le transistor V91. Le contact de travail du relais K1 commande à cet effet la base du transistor V85. De ce fait, le condensateur C15 est déchargé par le relais K2. Le condensateur C15 continue à alimenter le transistor V85 avec un courant de base supplémentaire. Au cours de cette troisième phase, le relais K1 est en position d'auto-entretien.

Au cours de la quatrième et dernière phase, le relais K2 est excité. Dès que le relais K2 a été excité, le transistor V91 est fermé et le courant de maintien traverse les contacts de fermeture des deux relais K1 et K2.

Dans ce circuit de démarrage 32, les relais K1 et K2 ne sont donc pas excités en même temps, mais l'un après l'autre. Comparé à l'état de la technique, ce type de démarrage est moins coûteux, plus efficace et assure une surveillance totale non seulement du circuit de démarrage 32, mais aussi de la machine montée en aval de ce circuit.

## Revendications

1. Circuit de surveillance pour contrôler en permanence plusieurs, au moins deux, notamment quatre, entrées de signaux (Z1, Z2, Z3, Z4), ledit circuit étant **caractérisé en ce que**:
- Les entrées de signaux (Z1, Z2, Z3, Z4) sont raccordées via deux condensateurs (C41,C43) et au moins un relais (K1,K2),
- une première entrée de signal (Z1,Z2) peut prendre un premier potentiel positif et une seconde entrée de signal (Z3, Z4) un second potentiel nul, les valeurs du premier potentiel et du second potentiel étant échangées alternativement,
- selon la valeur prise par leur potentiel, les entrées de signaux (Z1, Z2, Z3, Z4) sollicitent les condensateurs (C41, C42) de manière oscillante, les condensateurs étant ainsi chargés et déchargés alternativement, de telle sorte que les relais (K1, K2) captent en permanence une impulsion de courant de l'un ou l'autre des condensateurs.

2. Circuit de surveillance selon la revendication 1, **caractérisé en ce que** les entrées de signaux (Z1, Z2, Z3, Z4) sont connectées à des générateurs optoélectriques de signal.

3. Circuit de surveillance selon la revendication 1, **caractérisé en ce que** des entrées de signaux sont connectées à des transistors (V161, V165, V169, V181, V185; V189) directement pilotés par les potentiels des entrées de signaux.

4. Circuit de surveillance selon la revendication 1 **caractérisé en ce que**, au moins deux entrées de signaux (Z1, Z2, Z3, Z4) sont montées en parallèle.

## Claims

1. Monitoring circuit for constant monitoring of several signal inputs, at least two and particularly four (Z1, Z2, Z3, Z4), the said circuit being **characterised in that**:
- the signal inputs (Z1, Z2, Z3, Z4) are connected through two capacitors (C41, C43) and at least one relay (K1, K2),
- a first signal input (Z1, Z2) may apply a first positive potential, and a second signal (Z3, Z4) input may apply a second zero potential, the values of the first potential and of the second potential being exchanged alternately,
- depending on the value of their potential, the signal inputs (Z1, Z2, Z3, Z4) apply an oscillating potential to the capacitors (C41, C42) and the capacitors are charged and discharged alternately such that the relays (K1, K2) pick up a current pulse from one or the other capacitor at all times.

2. Monitoring circuit according to claim 1, **characterised in that** the signal inputs (Z1, Z2, Z3, Z4) are connected to optoelectric signal generators.

3. Monitoring circuit according to claim 1, **characterised in that** the signal inputs are connected to transistors (V161, V165, V169, V181, V185, V189) that are directly controlled by the potentials of the signal inputs.

4. Monitoring circuit according to claim 1, **characterised in that** at least two signal inputs (Z1, Z2, Z3, Z4) are connected in parallel.

## Patentansprüche

1. Überwachungsschaltung für eine konstante Überwachung von mehreren, zumindest zwei, insbesondere vier Signaleingängen (Z1, Z2, Z3, Z4), **dadurch gekennzeichnet, dass**
- die Signaleingänge (Z1, Z2, Z3, Z4) über zwei Kondensatoren (C41, C43) und zumindest ein Relais (K1, K2) angeschlossen sind,
- ein erster Signaleingang (Z1, Z2) ein erstes positives Potential und ein zweiter Signaleingang (Z3, Z4) ein zweites Nullpotential annehmen kann, wobei die Werte des ersten Potentials und des zweiten Potentials abwechselnd ausgetauscht werden, und dass
- je nach dem von ihrem Potential angenommenen Wert, die Signaleingänge (Z1, Z2 ,Z3 ,Z4) die Kondensatoren (C41, C42) oszillierend beaufschlagen, wobei die Kondensatoren **dadurch** abwechselnd aufgeladen und entladen werden, so dass die Relais (K1, K2) ständig einen Stromimpuls von dem einen oder dem anderen der Kondensatoren empfangen.

2. Überwachungsschaltung nach Anspruch 1, **dadurch gekennzeichnet, dass** die Signaleingänge (Z1, Z2 ,Z3 ,Z4) an optoelektrische Signalgeber angeschlossen sind.

3. Überwachungsschaltung nach Anspruch 1, **dadurch gekennzeichnet, dass** Signaleingänge an Transistoren (V161, V165, V169, V181, V185, V189) angeschlossen sind, die von den Potentialen der Signaleingänge direkt angesteuert werden.

4. Überwachungsschaltung nach Anspruch 1, **dadurch gekennzeichnet dass** zumindest zwei Signaleingäge (Z1, Z2 ,Z3, Z4) parallel geschaltet sind.
